# EUROPEAN PATENT APPLICATION

(11) **EP 2 305 443 A1**
(43) Date of publication of application: **06.04.2011**
(21) Application number: 10186513.7
(22) Date of filing: 05.10.2010
(51) Int. Cl.: B29C 44/32, B29C 44/46, F16L 59/14

(54) **Method and apparatus for thermally insulating pipes**

(30) Priority: 05.10.2009 IT MI20091705
(71) Applicant: Afros S.P.A., 21042 Caronno Pertusella (VA) (IT)
(72) Inventor: Fiorentini, Carlo, 21042, Caronno Pertusella (IT); Bonansea, Alberto, 21042, Caronno Pertusella (IT); Corti, Maurizio, 21042, Caronno Pertusella (IT)
(74) Representative: Coloberti, Luigi

(57) **Abstract**

A method and an apparatus for thermally insulating pipes (10) with a layer (11) of a rigid or semirigid foam of thermally insulating plastic material, provided between the outer surface of a pipe (10) and an outer sheath (12). A chemically reactive mixture comprising a low-boiling agent dissolved under pressure in solution is distributed directly around and along a tubular element or pipe (10) to be insulated, in a frothed condition; while maintaining a relative movement between the annular distributor (14) and the pipe (10). The method and the apparatus are suitable for continuous or discontinuous foaming processes for thermally insulating pipes (10).

## Description

### BACKGROUND OF THE INVENTION

The present invention relates to a method and an apparatus for jacketing pipes with a layer of a rigid or semirigid foam of a thermally insulating plastic material, for example a polyurethane foam; in particular the invention is directed to the manufacture of heat insulate pipes used for conveying and distributing hot or cool fluids.

Pipes provided with a thermal insulation are widely used for conveying and distributing hot or cool fluids to one or more users, for example for the distribution of hot water or steam, produced by proper thermal units, to groups of civil and/or industrial buildings, or for distributing cold water in conditioning plants.

The thermally insulated pipes are generally laid under the ground level or accommodated in proper tunnels; consequently, the thermal insulation must prevent both a heat dispersion towards the exterior in the case of hot fluids, and an undesirable warming of the cooled fluid.

In most cases the insulating foam has also to withstand to the compression or action of mechanical forces, as well as protect the pipes against damages and corrosion.

In the past the pipes were insulated by providing a covering of fibre glass or mineral wool, wrapped around the pipe, the insulating covering being protected by a spirally wound metal sheet.

For a long time, in substitution of coverings of fibre glass or mineral wool, use has been made of a rigid polyurethane foam owing to its excellent insulating properties, as well as because said rigid polyurethane foam protects the pipe from corrosion, shocks and/or damages, in consideration of its good compressive strength.

Consequently, several automatic or semiautomatic processes were developed for forming insulation coverings of plastic foamed material, both for metallic and plastic pipes, with not often fully satisfying results; in particular insulation systems were proposed using two different technologies:
A) By extrusion of a mass of a synthetic cellular material at the plastic state, which is distributed around a pipe, or injected between two coextruded tubular elements. Extrusion systems of this type are described for example in US-A-3.606.635, US-A-4.322.260, EP-A-0556665 and WO-A-84/03060.
B) By means of a liquid mixture of a chemically reactive resin, for example a polyurethane mixture containing a volatile expansion agent, which mixture is supplied by a mixing head, or by nozzles, according to the following modes:
   b1) The polyurethane mixture at the liquid state is injected between an internal pipe and an external sheath, as shown, for example, in WO-A-00/47387.
      This system gives rise to foams of inhomogeneous density due to the strong uncontrolled expansion and the creep that the foam necessarily perform in order to fully fill the annular space between internal pipe and external protective sheath, or between two coaxially arranged tubes.
   b2) The mixture at the liquid state is directly sprayed above the pipe, or between an internal pipe and an external sheath, a calibrating step being successively carried out by profiled crawlers or pairs of rollers; systems of this type are shown for example in EP-A-1371469 and DE-A-10331487. These systems produce in general the known problem connected with the spray, with consequent formation of sprayed resin aerosol, dispersion in the environment, and waste of material in continuous insulating processes. Furthermore, when the expanding mixture is sustained by an air flow, both before and during the expansion step, defects are generated in the foam due to incorporation of air.
C) A third system provides to continuously cast a polyurethane liquid mixture on a slightly bent tape of paper or plastic film, that is then longitudinally wound over the pipe as the polyurethane mixture expands; a system of this type is disclosed for example in FR-A-2589981.

This system, used both for pipes or tubular elements of great diameter, equal to or greater than 300-400 mm, and for tubular elements of smaller diameter, in continuous insulating processes, is not devoid of some drawbacks such as for example overlapping layers of foam and foam rolling and overlapping during the expansion.

Consequently, the main drawback of this third system consists in that, the mixture initially poured on the covering tape, before said covering tape is wound around the pipe, has a tendency to expand in all directions, i.e. expands by half the circumference of the interspace along an annular section, and simultaneously expands longitudinally to the interspace, running towards the point where said mixture is poured until said mixture overlaps the jet of the polyurethane mixture at the pouring point. A front of partially expanded foam is thus generated that moves back towards the pouring point, creating unacceptable faults due to density defects, regions of foam with incorporated air or, still worst, regions of collapsed foam resulting from a layer of liquid mixture, at a lower temperature, delivered by the mixing head, overlapping a layer of hot foam that already started to chemically react.

The present invention is intended to improve this technology.

Other systems or apparatuses for manufacturing insulation coverings for pipes, in continuous or discontinuous processes, are disclosed for example in GB-A-1176906, US-A-4522578 or EP-A-1609578.

In a process of conventional foaming for production of polyurethane foams, the expansion of the liquid mixture is caused by an exothermic reaction between a polyole and an isocyanate; during the reaction, CO2 gas is formed and the volatilization of a blowing agent that generates the cells in the resulting foam. However, in thermal insulation of pipes, the use of liquid polyurethane mixtures comprising a blowing agent, again implies the previously referred drawbacks.

Use is also known of a low-boiling blowing agent, having a boiling temperature by at least five degrees lower than the environment temperature at the atmospheric pressure, which low-boiling blowing agent is initially dispersed into solution within the chemical components, and maintained under pressure in a dispersion state within the mixture until said mixture is delivered. During the delivery, as the pressure is released, the blowing agent rapidly vaporises, generating a thick cream in the form of a pre-expanded foam, according to a technology known with the term of "froth".

To date, the pre-expansion or frothing technology was proposed and applied for producing rigid or flexible foam slabstocks, panels and/or padding, as disclosed for example in EP-A-0646226, wherein the pre-expanded polyurethane mixture is poured on a moving substrate, or injected into the cavity of a mould.

### OBJECTS OF THE INVENTION

Thus, an object of the present invention is to provide a method and a device for thermally insulating pipes by applying a rigid or semirigid foam of plastic material, obtained from a liquid and chemically reactive mixture, that advantageously exploits the pre-expansion or frothing technology, so as to achieve a thermally insulating covering in the form of a homogeneous layer of foam, by obviating to the known problems of the technologies previously in use.

In searching of new solutions tending to obtain the above referred object, and to solve the problems connected with the production of thermally insulated pipes, as well as during experiments carried out by using a rigid polyurethane foam from a liquid reactive mixture, into which a certain amount of a low-boiling blowing agent, for example CO2, was dissolved under pressure in the same mixture, the applicant experienced a good tendency of the pre-expanded or frothed foam to adhere to the vertical, protruding or anyway oriented surfaces, and to further expand without dripping or incorporating air; the foam held a good cellular structure and stability.

Continuing the tests, the applicant concluded that, working under certain conditions and using a proper pouring or delivering device, pre-expanded foams can be obtained and distributed directly around and along a tubular element to be thermally insulated, without the foam collapses, rolls and overlaps, deforms or drips under the action of the gravity, continuing to adheres to the tubular element up to fully expand and polymerise.

A lot of studies were performed about the structure and the dynamic behaviour of the foams, reaching the conclusion that the foam consists of a colloid formed by a gas dispersed in a liquid, where the liquid forms the continuous phase.

In general, the bubbles of gas in the liquid are characterized by various dimensions and are maintained in equilibrium by the pressure of the gas, counterbalanced by the surface tension of the liquid.

This dispersion has a critical point corresponding, in volume, to about 60÷65% of gas with respect to the total volume of the colloid. The exact value of the critical point depends on the statistical dimension of the bubbles that form during the pre-expansion of the gas dissolved in solution, at the release of the pressure, and on the surface tension of the liquid of the reactive mixture.

If the gas volume in the expanded foam is lower than the critical value, the cells adopt a spherical shape with consequent instability of the foam and tendency to flow like a liquid and to coalesce during the time.

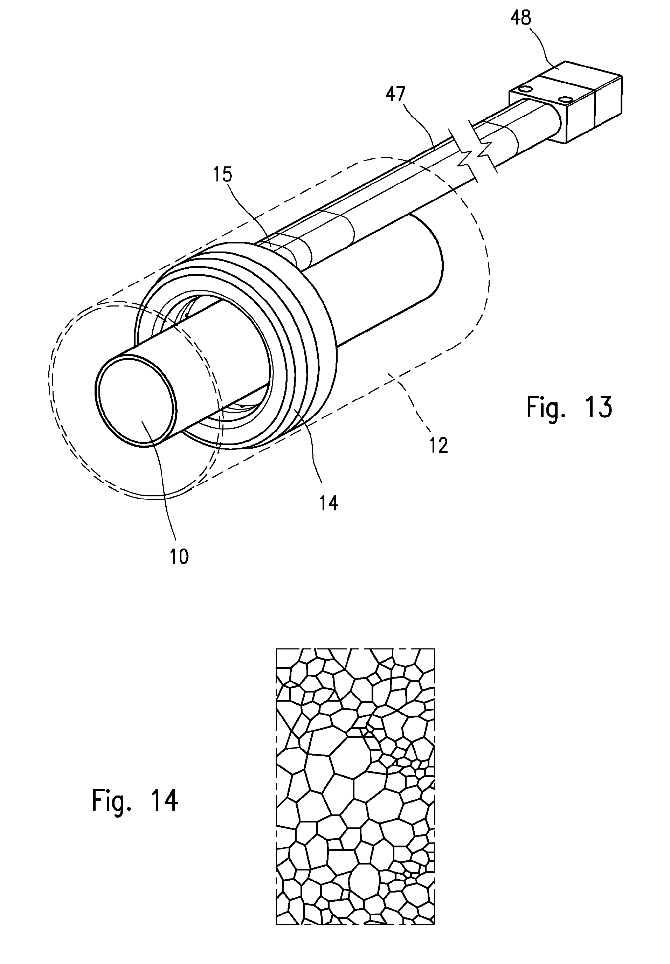

If, on the contrary, the gas volume in the expanded foam is higher than the critical point, the cells approach to each other remaining separated by flat membranes, which are always larger as the percentage of gas in the colloid is higher, as shown in the example of figure 14. As more the percentage of gas increases, more the cells adopt a fully polyhedral shape, with wide membranes having always more thin edges and vertices.

Consequently, the polyhedral shape of the cells activates a semisolid behaviour of the foam, that differs from the behaviour of the foams obtained from mixtures below the critical point, wherein, by effect of the gravity, the mixture flows downwards like a liquid and the gas phase has the tendency to rapidly separate by flotation and as a consequence of capillarities resulting from the surface tension, and to collapse in greater cells by breakage of the membranes.

Furthermore, as the foam proved to have a tendency to maintain a certain adhesion to the surfaces to which said foams came into contact, since the molecular polarities of the foaming and surfactant agents contained in the mixture migrate to the surface, oppose the action of the surface tension in the liquid and consequently the tendency of the foam not to adhere.

Starting from these assumptions, the applicant has ascertained that, working with proper formulations of liquid reactive mixtures, in particular polyurethane mixtures containing prefixed amounts of a low boiling foaming agent in solution and surfactants suitable for forming foams, as well as working with a delivering device suitable for causing the mixture to pre-expand when said mixture is delivered, a pre-expanded or frothed foam could be distributed directly around and adherent to a cylindrical surface of a tubular element or pipe; in this way, a subsequent expansion by chemical reaction and a homogeneous radial growth of a stable foam were enabled, with said stable foam having an isotropic cellular structure, free from incorporated air and being not subjected to the rolling effect caused by the gravity, owing to the limited specific weight of the froth, as well as free from shear loads such to cause a cell deformation.

In particular, the applicant verified that working with mixtures formulated in order to enable to form pre-expanded foams having cells wherein the gas volume was higher than the critical value of the mixture, in particular ranging between 60% to 95%, wherein the percentage of the low-boiling pre-expansion agent dissolved in the liquid mixture ranged between 6 to 250 thousandths of mole every 100 grams of reactive mixture, thermal insulation could be formed for pipes of various diameter, working with continuous or discontinuous processes. When the expansion agent is CO2, the amount of CO2 in 100 grams of reactive mixture can range between 0,260 g, to 8,00 g.

### SUMMARY OF THE INVENTION

These and further features of the invention can be achieved by a method according to claim 1, as well as by a device for delivering and distributing a pre-expanded or frothed chemically reactive mixture to provide a thermally insulating foam on a pipe according to claim 11.

In general, according to the invention, a method has been provided for thermally insulating a pipe, by an intermediate layer of a rigid or semirigid foam of a thermally insulating plastic material between the pipe and an external sheath;
wherein a liquid, chemically reactive mixture is fed by a distributor of annular shape, coaxially arranged to the pipe; and
wherein the reactive mixture is circumferentially distributed around the pipe and allowed to react and to form the intermediate insulating layer, characterized by the steps of:
supplying the distributor with a reactive pressurised mixture formulated with a low-boiling gaseous pre-expansion agent, dissolved under pressure in solution;
causing the reactive mixture to expand in the form of a frothed foam, by releasing the pre-expansion agent in gaseous form within the mixture while said reactive mixture flows through a gap or restricted path conformed to gradually reduce the pressure and wherein the ratio of the volume of gas to the total volume of the frothed foam is higher than 60%;
circumferentially delivering the frothed foam directly into contact with and around the pipe;
continuing to deliver the frothed foam around and along the pipe, performing a relative movement between the foam distributor and the pipe; and
enabling the frothed foam adhered to the pipe to further expand and react.

According to another aspect of the invention, a device has been provided for delivering a pressurized foamable mixture to form a pre-expanded or frothed rigid or semi-rigid foam suitable for forming a thermally insulating covering or casing on a pipe, wherein the delivering device comprises a distributor of annular shape, comprising:
a circular channel for distributing a flow of reactive mixture around the pipe; and
a froth delivering gap or restricted flow path in the distributor on a side of said channel;
the delivering gap or restricted flow path being conformed to gradually reduce the pressure in the mixture and cause the pre-expansion agent to be released within the reactive mixture in a gaseous form, as well as being conformed and oriented to provide the reactive mixture to be circumferentially distributed in the form of a frothed foam around and towards the pipe.

The tubular element to be thermally insulated can comprise one or more coaxially arranged pipes of metal and/or plastic material, and an external protective or containing sheath, of any type or material, for example consisting of a tape of paper, a plastic film, or other web material, longitudinally wrapped around the pipe; otherwise, the external protective or containing sheath may consists of a second tubular element in metal or plastic material arranged or coaxially formed with respect to an internal pipe.

### BRIEF DESCRIPTION OF THE DRAWINGS

These and further features and advantages of the present invention, will be more apparent from the following description, carried out with reference to some preferred embodiments shown in the enclosed drawings, wherein:
Figure 1 schematically shows an apparatus for forming a thermal insulation for pipes by a continuous process, wherein use is made of an annular device for delivering and distributing a pre-expanded or frothed polyurethane mixture, according to the invention;
Figure 2 is a front view of a first embodiment of the annular distributing device;
Figure 3 is an enlarged longitudinal cross sectional view of figure 1;
Figure 4 is an enlarged detail of figure 3;
Figure 5 is an enlarged detail of figure 4;
Figure 6 is a second embodiment of the annular distributing device for the frothed mixture, in a cross sectional view according to line 6-6 of figure 7;
Figure 7 is a cross sectional view according to line 7-7 of figure 6;
Figure 8 is an enlarged detail of figure 6;
Figure 9 is a cross sectional view according to line 9-9 of figure 7;
Figure 10 is an enlarged detail of figure 7, suitable for showing a further feature of the froth distributor;
Figure 11 is a front view of an annular distributing device of elliptical shape;
Figure 12 shows the sloping arrangement of the elliptic distributing device of figure 11, with respect to a tubular element above which the pre-expanded reactive mixture must be delivered;
Figure 13 is a perspective view of a distributing annular device, according to the invention, suitable for a discontinuous process;
Figure 14 shows a schematic and enlarged view of the cellular structure of a foam for thermally insulating pipes, obtained from a pre-expanded or frothed reactive mixture according to the invention.

### DETAILED DESCRIPTION OF THE INVENTION

As previously said, the invention is directed to a method for forming a thermal insulation on pipes for conveying and distributing fluids, for example hot or cool water, steam, or gas; as shown, a tubular assembly comprises at least an internal pipe 10 for conveying the fluid, an intermediate and thermally insulating layer 11, for example a rigid polyurethane foam obtained from a chemically reactive liquid mixture, properly formulated in order to allow a pre-expansion or frothing of the foamable mixture, and an external sheath 12 for protecting and/or covering the layer of insulating foam 11.

For the purpose of the present description, by way of example only, reference will be made to the use of a chemically reactive polyurethane mixture, any other foamable mixture of a synthetic resin, suitable for the provided use, being not excluded.

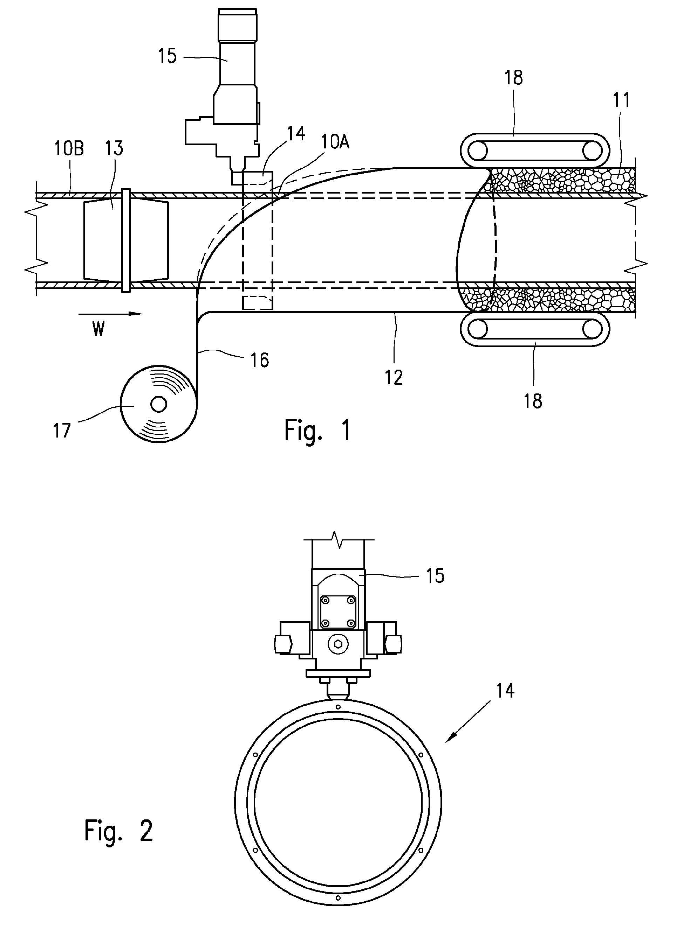

In particular, figure 1 shows two axially aligned, internal pipes 10A and 10B, connected by a joint element 13. The two pipes 10A and 10B are caused to move through an annular device 14 conformed for delivering and distributing a polyurethane mixture in the form of a pre-expanded or frothed foam, in which the mixture is continuously supplied by a mixing head 15, for example of high pressure type. The mixing head 15 is operatively connected, in a per se known manner, via metering pumps, to storing tanks for polyurethane components to be mixed, such as a polyole and an isocyanate, into one of which, or both, a low-boiling, pre-expansion agent, for example CO2, has been dissolved and maintained in solution under pressure conditions.

The pipes 10A and 10B, downstream the annular device 14 for distributing the frothed polyurethane foam, are provided with an external sheath 12 for retaining or protecting the layer of insulating foam 11, which external sheath 12 is advanced and moved synchronously by dragging with the pipes 10A, 10B.

In the example of figure 1, the external sheath 12 consists of a web 16, for example a paper web, a plastic film or other web material, that is continuously unwound from a roll 17 and folded in tubular shape, as schematically shown, by shaped guide elements.

In general, the protective sheath 12 exhibits a diameter greater than the internal pipe 10, as a function of the thickness of the insulating foamed layer 11 and the degree of the required insulation.

The pre-expanded or frothed polyurethane foam is circumferentially delivered by the distributor 14, directly around and along the internal pipe 10, a relative and longitudinal movement being maintained between the pipe 10 and the distributor 14, for example by causing the joined pipes 10A, 10B to move in direction of the arrow W.

The pipes 10 can be properly pre-treated for surface cleaning and adhesion, and, if necessary, can be pre-heated in order to facilitate the frothed polyurethane mixture to adhere and further expand.

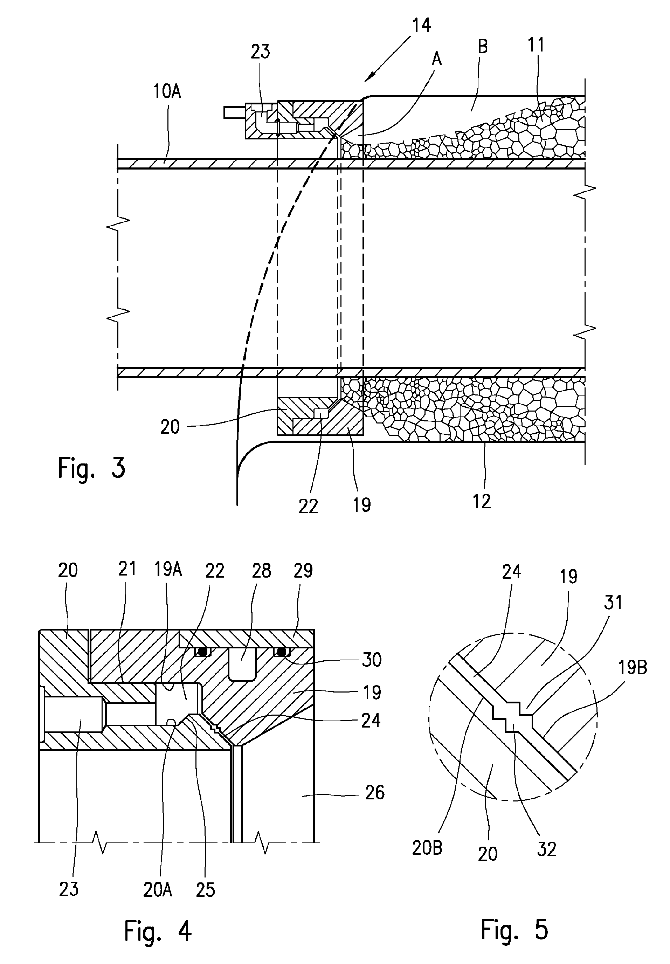

The mixture in the form of a frothed foam is delivered directly around and onto the pipe 10, starting from a deposition region A (figure 3) immediately downstream the distributing device 14; a region B follows the deposition region A of the pre-expanded mixture, along which region B the pre-expanded or frothed foam further expands in radial direction, as an effect of the chemical reaction between the chemical components up to fully fill the annular interspace between the pipe 10 and the sheath 12.

Downstream the expanding region B, as shown in figure 1, the apparatus may comprise a per se known profiling and calibrating device, schematically indicated by a pair of crawlers 18, profiling rollers or any other suitable device, which profiling and calibrating device co-operates to synchronously drive the external sheath 12 with the advancing movement of the internal pipe 10.

A first embodiment of the device for delivering and distributing a pre-expanded reactive mixture is shown in the figures 2 to 4 of the drawings.

The froth distributing device 14 exhibits an annular shape, for example a circular shape, the internal diameter of which is greater than the maximal external diameter of the pipes 10 onto which the insulating layer 11 must be formed.

As can be noted in figures 3 and 4, the distributing device 14, referred to also as distributor, comprises two axially aligned metallic rings, in particular a fore ring 19 and a rear ring 20, mutually in contact at shoulder surfaces 21 and properly connected in a manner suitable for being disengaged, for example by a crown of screws.

The distributor 14 comprises an annular channel 22 for feeding and distributing a pressurised foamable reactive mixture supplied by a mixing head 15 through an inlet hole 23 in the rear ring 20; the reactive pressurised mixture at a liquid state flows along the channel 22 and through a gap 24 in the form of a narrow or restricted path conformed to gradually cause a pressure reduction and a pre-expansion agent to be gradually released in a gaseous form, within the same mixture, to generate a pre-expanded or frothed foam; furthermore, the gap 24 must be conformed to circumferentially distribute the frothed foam directly towards and against the pipe 10, and into the annular interspace.

According to a preferred embodiment, both the fore ring 19 and the rear ring 20 exhibit first opposite surfaces 19A and 20A conformed to provide the annular channel 22 for distributing and conveying the reactive mixture; from figure 4 it can be further noted that the channel 22, at the side opposed to the inlet hole 23 for the mixture, exhibits a step 25 having a sloping surface in order to convey the flow of the mixture towards the circumferential gap of the distributor 14.

Still from figures 4 and 5 it can be further noted that the two rings 19 and 20 exhibit second flat surfaces 19B and 20B, mutually facing and properly conformed to provide a gap 24 for outlet of the mixture, in the form of a narrow annular path that extends from the channel 22 towards an outlet opening 26 for the pre-expanded mixture.

On the basis of all previously said, the length and the thickness of the gap 24 must be properly calculated so that the pressure in the flowing mixture gradually reduces so as to release in controlled manner the pre-expansion agent in form of a gas, suitable to start the formation of small pre-expanded cells.

The distance between the surfaces and consequently the cross section of the gap can be constant or change along the circumference, increasing from the top to the bottom so as to deliver a proportionally higher flow towards the bottom where an interest exists that the annular interspace be immediately filled by the pre-expanded foam, and in order to prevent air bubbles from being incorporated at the surface of the underlying sheath.

Consequently, the flux of the pre-expanded and frothed polyurethane mixture delivered by the annular distributor 14 is oriented towards and against the pipe 10 and into the interspace between the pipe 10 and the sheath 16, so as to fully wrap said pipe 10, by adhering to the external surface of the same pipe. As previously stated, all that is caused by the tendency of the pre-expanded foam to directly adhere to the surface of the pipe 10, without flowing downwardly and in a direction opposite to the movement of the pipe as an effect of the gravity.

As previously reported, the device according to the invention produces, delivers and distributes a pre-expanded foam or "froth", along the entire circumferential surface of the pipe 10, to which said pre-expanded foam adheres, while a relative and longitudinal movement takes place between the delivering device 14 and the pipe 10.

This way of working not only enables the foam to be distributed over the entire circumference and in the longitudinal direction of the pipe, but enables as well the foam to grow only in the radial direction, preventing the known phenomena of flowing back and rolling of the delivered mixture, typical for the previous systems. Furthermore, the use of CO2, or other liquefied gas dissolved under pressure in solution as a low-boiling agent for pre-expansion, enables to reduce the use of expensive and dangerous substances, such as Freon or hydrocarbons, amino catalysts, even though cooperating, in the case of polyurethane mixtures, to reduce the consumption of isocyanate.

Reverting to the example of figure 4, it can be noted that the outlet gap 24 exhibits a conical shape converging towards the longitudinal axis of the annular distributor 14, followed by a diffuser substantially consisting of a forwards diverging conical surface of the fore ring 19.

The conicity of the gap 24 can be any, as long as suitable for directing the pre-expanded mixture towards the pipe 10, above which a layer of insulating foam has to be formed.

Preferably, depending on the internal diameter of the annular distributor 14 and the external diameter of the pipe 10, the angle formed by the axis of the gap 24 with the axis of the annular distributor 14 can be selected within a wide range of values.

In general, it can be stated that, the angle formed by the gap 24, or more in general by the restricted flow path for delivering the pre-expanded foam, with the longitudinal axis of the annular distributor 14, can range between 0° to 90°; i.e. the orientation of the gap 24 can range between a direction substantially parallel to the longitudinal axis of the distributor 14, and a radial direction. In the case that the gap 24 is directed parallel to the axis of the annular distributor, or along a slightly different direction, the distributor 14 is properly provided with a deflector, not shown, suitable for diverting the flow of the pre-expanded foam towards and around the pipe 10.

In the case of figure 4, the restricted flow path 24 is in the form of a circular gap; however, said flow path can have any other conformation, as long as suitable for providing the required result; for example, in substitution of the circular gap, use could be made of a circular crown of angularly spaced apart holes of small diameter, such to generate the required effect of releasing the pre-expansion agent and frothing the polyurethane mixture.

Still with reference to the example under consideration, figures 3 and 4 show a further feature both of the method and the distributing device according to the invention.

Within the continuous foaming technology, when the delivering ducts are particularly narrow, the occlusion of said delivering ducts due to the formation of encrustation of reacted mixture must be prevented, which encrustation has the tendency during the time to grow and accumulate.

In order to solve or partially reduce this problem, the annular distributor 14 has been provided with a suitable cooling system for cooling the side surfaces of the gap designed to come into contact with a boundary layer of the mixture flowing along the same gap; thus, the boundary layer of the mixture is maintained at a temperature lower than a base reaction temperature of the reactive mixture; consequently, the polymerisation and the hardening of the boundary layer of the mixture on the contact surfaces of the gap are delayed or prevented.

For the objects of the present description, it is specified that the "boundary layer" of the mixture corresponds to an ideal region of the flow of mixture where the effects of the viscosity and the laminar state of the same mixture are more evident, i.e. directly near to the contact surfaces of the gap, where the flowing speed of the fluid is very low, with tendency to zero.

Since with conventional polyurethane formulations, the base reaction temperature T1 ranges between 15° to 60°C, the boundary layer is recommended to be maintained at a cooling temperature T0 smaller than T1 by 3 or more degrees, temperatures lower than 0°C being not excluded.

The cooling of the annular distributor can be carried out with any suitable means; for example, the cooling can be provided by circulation of a cooling fluid, such as a mixture of water and glycol, in a circular duct 28 within the fore ring 19, or alternatively also within the rear ring 20, as near as possible to the contact surfaces 19B and 20B with the reactive mixture. In the shown case, the duct 28 is in the form of a slot tightly closed by a cylindrical ring 29 and two annular gaskets 30. Thus, the cooling fluid flowing within the duct 28 removes heat and cools the surfaces of the gap 24, preventing a boundary layer of reacted mixture from reaching or delaying the reaction of the mixture in said boundary layer; in this manner, the speed of the exiting flow of mixture, as well as the possible presence of a device to generate a turbulent state in the fluid, are enabled to work very more effectively in maintaining the gap clear for all the time technologically needed to complete the foaming. The use of a device for generating turbulence along the gap 24 promotes as well a releasing action of the pre-expansion agent in gaseous form and consequently the pre-expanding action of the mixture into a froth.

An embodiment of the device for generating the turbulence is shown in the detail of figure 5, in which the same reference numbers were used as figure 4 for indicating similar or equivalent parts. From figure 5 it is noted that the contact surfaces 19B and 20B, at a central region of the gap 24, or in another desired position, are provided with opposite circular slots and rips or indentations 31, 32, having a triangular profile, or sharp edges.

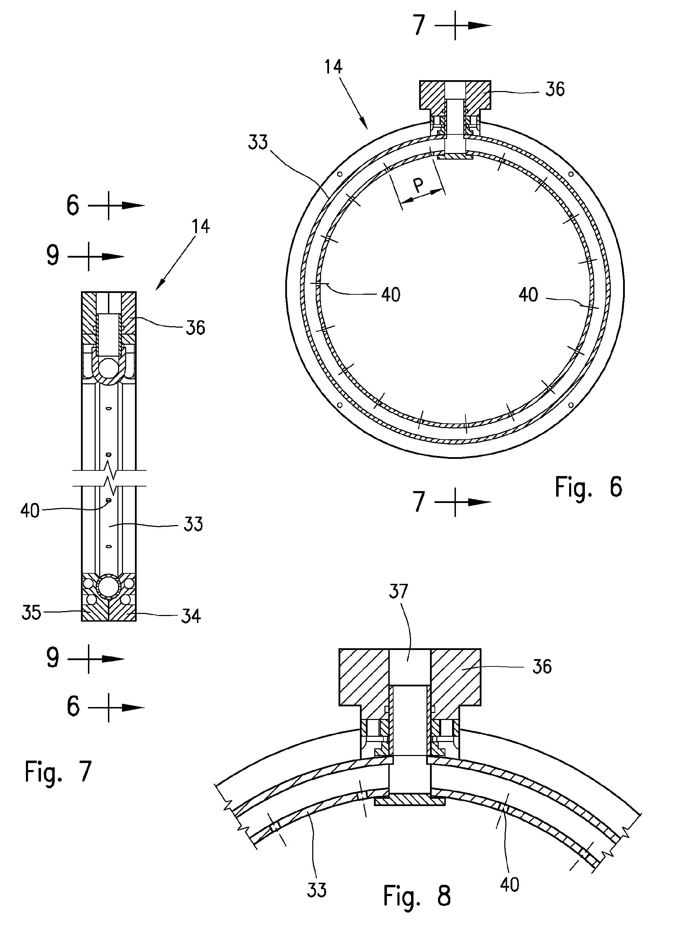

The figures 6, 7 and 8 show a second embodiment of the distributing device 14. Unlike the previous case, the distributing device 14 of figures 6-8 comprises a circular tubular element 33 arranged between two metallic rings 34, 35, fastened each other by screws or clamps in a manner suitable for being disengaged. The two opposite ends of the tubular element 33 are tightly threaded and locked in a connecting member 36, properly conformed with a central duct 37 for connecting said tubular element 33 with a mixing head 15, as in the previous case.

The tubular element 33 exhibits, along its own internal diameter, starting from the connecting member 36, a plurality of radial holes 40, angularly spaced apart to each other, that are properly dimensioned for providing a set of restricted openings required for generating the desired pressure drop and causing a controlled pre-expansion of the outcoming mixture.

All the holes 40 can be of a same diameter and angularly spaced apart to each other by a constant pitch P, or the holes 40 can be spaced apart by a variable pitch; for example, said holes can exhibit a maximal pitch at the connecting member 36, with said pitch gradually decreasing up to a minimal at a position diametrically opposed with respect to the connecting member 36. As an alternative solution or in combination with the variable pitch, the holes 40 could have a variable diameter, that starting from the connecting member 36 progressively increases so as to deliver a greater flow rate of pre-expanded foam at the bottom, which foam is suitable for filling, already at the start, the underlying annular space with only the pre-expanded foam, in order to prevent air bubbles from being incorporated.

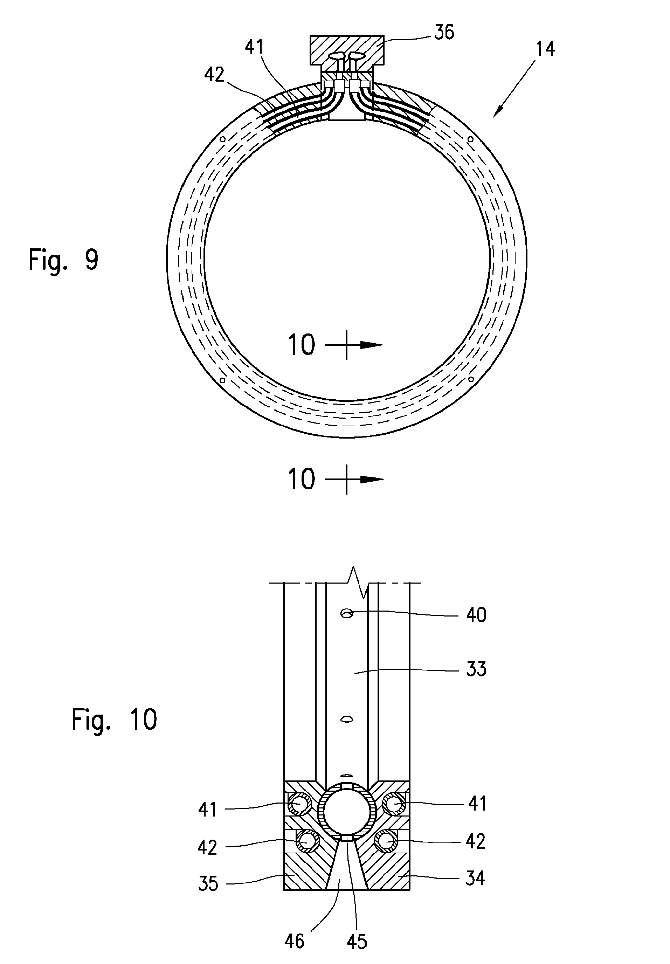

As previously reported, also in this second case the froth distributor 14 may comprise a cooling system for the gap. In this regard, as shown in the front view of figure 9 and the enlarged detail of figure 10, two ducts 41 and 42 for circulating a cooling fluid are provided on both sides of the distributor 14, said ducts 41 and 42 being arranged within respective seats of the two fore and rear rings 34 and 35; the two ducts 41 and 42 are suitable for being connected with a source of a cooling fluid via suitable passageways in the connecting member 36.

Figure 10 shows, by way of example, a further optional feature of the distributor 14 of figure 6. In all the previous examples, the outlet for the pre-expanded foam whether consisting of the continuous gap 24 of figures 3 and 4 or the crown of holes 40 of figures 6-8, the pre-expanded foam is circumferentially delivered towards the interior of the distributor, directly around and along the pipe 10.

In order to give both the method and the distributor 14 a further improvement, so as to improve consequently the delivering and the distributing conditions of the pre-expanded mixture, for continuous or discontinuous processes, by aiding the interspace in the lower portion to be already filled with the pre-expanded foam, the duct 22 for distributing the mixture, or the tubular element 33, can be conformed with a plurality of outlet holes 45 for the mixture, downwardly oriented along the external surface along a limited delivering region oriented towards the underlying protective sheath 12, said delivering region extending for example along a circular arc equal to or smaller than 120°.

That is shown, by way of example, in figure 10 wherein one of the outlet holes 45 of the tubular element 33 opens into an outwardly diverging hole 46 provide into the opposite rear and fore rings 34, 35.

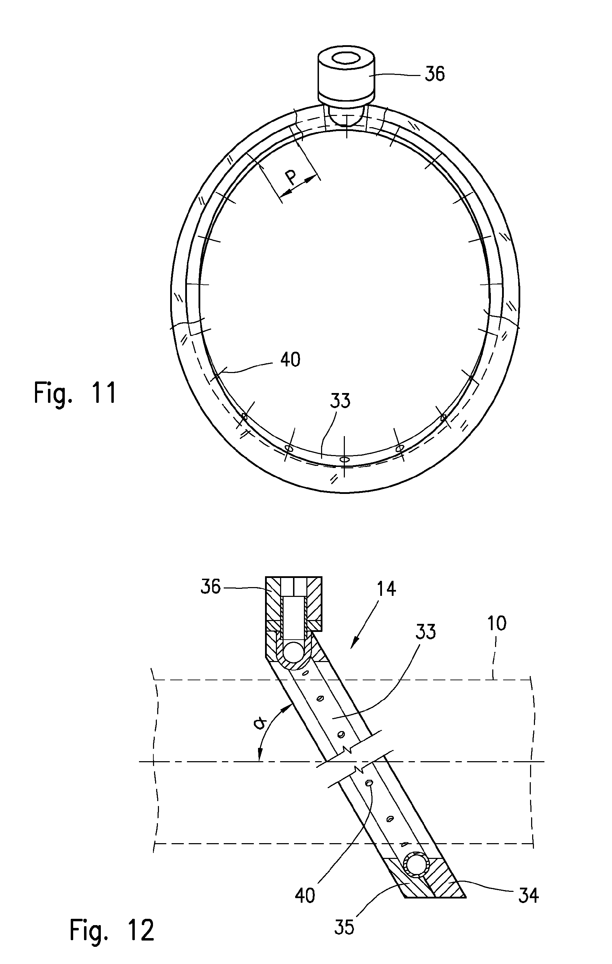

Figures 11 and 12 show in turn a further conformation of the distributor 14, and a different arrangement of said distributor 14 with respect to the pipe 10, which is schematically indicated in figure 12 by broken lines.

In the previous cases, the annular distributor 14 for delivering the pre-expanded foam was of circular shape and arranged in a vertical plane, or in a plane orthogonal to the longitudinal axis of the pipe 10.

In the case of figures 11 and 12, the distributor 14 is still of the type shown in the figures 6-8; consequently, the same reference numbers were used to indicate similar or equivalent parts. However, in the example now under consideration, the distributor 14 exhibits an elliptical shape laying a plane forming an angle α smaller that 90° with respect to the longitudinal axis of the pipe 10. Anyway, the elliptic internal profile of the distributor 14 and the sloping arrangement thereof must be such that the distance between the internal elliptic profile of the distributor and the external surface of the pipe 10, when measured in a radial direction, is always constant. In particular the inclination must be such to enable the distributor 14 to deliver the pre-expanded foam, at the start over the bottom or lower surface of the pipe 10 and successively upwards, enabling so the air to be perfectly vented. The inclined direction of the distributor 14 depends on the relative movement between the pipe 10 and the same distributor 14; when the distributor 14 is stationary, whereas the pipe 10 slides forwards, the distributor 14 has to be inclined forwards, i.e. according to the sliding direction of the pipe 10; in the opposed case, when the pipe 10 is stationary, while the distributor 14 moves from the rear end towards the fore end of the pipe, the elliptic distributor 14 has to be inclined rearwards, or in the direction opposed to its movement.

In both cases, the distribution of the froth around the pipe 10 is furthermore improved. Actually, considering a cross section in a plane orthogonal to the longitudinal axis of the pipe, the pre-expanded foam in the lower portion of the distributor 14 is delivered in advance the distribution of the pre-expanded foam in the upper portion; consequently, said pre-expanded foam delivered in the lower portion will be able to fill the interspace in advance with respect to the pre-expanded foam delivered in the upper portion, thus improving the venting of the air, so that said air is not incorporated into the foam regardless of being pre-expanded or produced by reaction during the successive chemical expansion step.

Figure 13 shows in turn the example of a device for delivering a reactive pre-expanded mixture according to a discontinuous process for laying and forming an insulating layer on a pipe 10; also in figure 13 the same reference numbers were used of the previous examples for indicating similar or equivalent parts.

In the case of figure 13, the pipe 10 is stationary, whereas the annular distributor 14 is caused to longitudinally move with respect to the pipe 10, between said pipe 10 and the external sheath 12, starting from the end of the pipe.

Consequently, as shown in figure 13, the distributor 14 is connected to the mixing head 15 of reduced dimensions to enter the annular interspace, at the forward end of a tubular rod 47, inside which the supplying and recirculating ducts for the chemical components of the reactive mixture are housed, which ducts, in turn are suitable for being connected with storing tanks for the chemical components via a valve device 48 for remotely controlling the mixing head 15. For all remaining, the distributor 14 of figure 13 operates in a fully identical or equivalent manner as the distributor previously described.

In the examples previously described, the pre-expanded foam is delivered directly in the annular interspace existing between the pipe 10 and the external sheath 12, with the pipe 10 being stationary or provided with a relative linear movement. According to another solution of the invention, the pre-expanded foam can be delivered directly above the pipe 10 while said pipe 10 is maintained in rotation, providing to successively thread the pipe 10 into a tubular sheath of plastic material extruded around the layer of insulating foam 11.

From all said and shown above, a method have been provided, as well as an annular device for distributing a chemically reactive mixture in the form of a pre-expanded foam of a plastic material, for forming heat insulated pipes with a rigid or semirigid foam, by means of which the pre-expanding or "frothing" technology is advantageously exploited for achieving a circumferential distribution of a frothed chemically reactive mixture, directly all around a pipe when the frothed or pre-expanded foam is delivered. In this way, the typical problems of the systems previously in use are obviated, while simultaneously the features of the foam and the thermal insulating features of said pipe are improved.

All said and shown in the enclosed drawings is intended to have been given by way of explanation for the general features of the invention, and some preferred embodiments thereof; consequently, other modifications or variations can be brought to the method, to the formulations of the chemical reactive mixture to the type of pre-expanding agent and to the annular distributor device, without thereby departing from the enclosed claims

## Claims

1. A method for thermally insulating a pipe (10), by an intermediate layer (11) of a rigid or semirigid foam of a thermally insulating plastic material into an annular interspace between the pipe (10) and an external sheath (12);
wherein a liquid, chemically reactive mixture is fed by a distributor (14) of annular shape, coaxially arranged to the pipe (10); and
wherein the reactive mixture is circumferentially distributed around the pipe (10) and allowed to react and to form the intermediate insulating layer (11), **characterized by** the steps of:
supplying the distributor (14) with a reactive pressurised mixture formulated with a low-boiling gaseous pre-expansion agent, dissolved under pressure in solution;
causing the reactive mixture to expand in the form of a frothed foam, by releasing the pre-expansion agent in gaseous form within the mixture while said reactive mixture flows through a gap or restricted path (24, 40) conformed to gradually reduce the pressure and wherein the ratio of the volume of gas to the total volume of the frothed foam is higher than 60%;
circumferentially delivering the frothed foam directly into contact with and around the pipe (10);
continuing to deliver the frothed foam around and along the pipe (10), performing a relative movement between the foam distributor (14) and the pipe (10); and
enabling the frothed foam adhered to the pipe (10) to further expand and react.

2. The method according to claim 1, **characterized by** that the ratio between the volume of gas and the total volume of the pre-expanded foam ranges between 60% and 95%.

3. The method according to claim 1, **characterized by** that the percentage of low-boiling pre-expansion agent dissolved in solution within the reactive mixture ranges between 6 thousandths to 250 thousandths of mole every 100 grams of reactive mixture.

4. The method according to claim 1, **characterized by** that the pre-expansion agent dissolved in solution is CO2.

5. The method according to claim 4, **characterized by** that the percentage of low-boiling pre-expansion agent dissolved in solution within the reactive mixture ranges between 0,260 g to 8,00 g of CO2 every 100 g of reactive mixture.

6. The method according to claim 1, **characterized by** delivering a greater amount of pre-expanded foam downwards and towards the bottom of the annular interspace (13) between the pipe (10) and the external sheath (12).

7. The method according to claim 1, **characterized by** delivering a flow of pre-expanded foam, that progressively increases from the upper portion towards the underlying portion of the annular distributor (14).

8. The method according to claim 1 wherein the delivering gap (24) has contact surfaces with the flow of reactive mixture, **characterized by** cooling the contact surfaces of the gap (24) with the reactive mixture.

9. The method according to claim 1, **characterized by** maintaining the pipe (10) in rotation during the delivering of the pre-expanded reactive mixture.

10. The method according to claim 1, **characterized by** circumferentially distributing the pre-expanded reactive mixture around the pipe (10) and along the annular interspace between the pipe (10) and the external sheath (12).

11. A device for thermally insulating a pipe (18) according to the method of claim 1, by a delivering device consisting of an annular distributor (14), **characterized in that** the annular distributor (14) comprises:
a circular channel (22) for distributing a flow of pressurised reactive mixture; and
a delivering gap (24, 40) along said circular channel (22);
the delivering gap (24, 40) being conformed to cause the pressure to be gradually reduced and the expansion agent to be delivered in the reactive mixture, as well as being conformed and oriented to provide the reactive mixture to be circumferentially distributed in the form of a frothed foam around and towards the pipe (10).

12. The device for thermally insulating a pipe according to claim 11, **characterized by** that the annular distributor (14) comprises:
axially aligned front ring (19) and rear rings (19, 20);
said rings (19, 20) comprising first opposite facing surfaces (19A, 20A) conformed to provide said circular channel (22) for distributing the reactive mixture, as well as comprising second opposite facing surfaces (19B, 20B) conformed to provide the delivering gap (24) said gap (24) being in the form of a narrow opening that circumferentially extends at an internal side of the channel (22).

13. The device for thermally insulating a pipe (10) according to claim 12, **characterized by** that the distance between the opposite facing surfaces (19B, 20B) of the gap (24) is constant over the entire circumferential extension.

14. The device for thermally insulting a pipe (10) according to claim 12, **characterized in that** the distance between the opposite facing surfaces (19B, 20B) of the gap (24) increases from the upper portion towards the lower portion of the same gap (24).

15. The device for thermally insulating a pipe (10) according to claim 12, **characterized in that** said gap (24) is in the form of a crown of angularly spaced apart holes (40).

16. The device thermally insulating a pipe (10) according to claim 11, **characterized by** comprising:
axially aligned fore ring and a rear ring (34, 35), said rings (34, 35) being conformed with a circular seat for accommodating a tubular element (33);
a tubular element (33) within said circular seat between the rings (34, 35), said tubular element (33) defining said channel for distributing the reactive mixture, said tubular element (33) having an internal side a crown of angularly spaced apart holes (40) conformed for delivering the frothed foam.

17. The device for thermally insulating a pipe (10) according to claim 15 or 16, **characterized by** that said holes (40) are angularly spaced apart by a constant pitch (P).

18. The device for thermally insulating a pipe (10) according to claim 15 or 16, **characterized by** that said holes (40) are spaced apart by a variable pitch (P), that progressively decreases from the upper portion to the lower portion of the gap (24).

19. The device for thermally insulating a pipe (10) according to claim 15 or 16, **characterized in that** each of the holes (40) has a constant diameter, and the diameters of the holes (40) are progressively increasing from the upper portion to the lower portion of the annular distributor (14).

20. The device for thermally insulating a pipe (10) according to claim 11, **characterized by** comprising a first delivering gap (24) or holes (40) facing the pipe (10), and a second gap or holes (45) facing the external sheath (12).

21. The device for thermally insulating a pipe (10) according to claim 11, **characterised in that** the annular distributor (14) comprises a delivering gap (24) forming an angle between 0° to 90° in respect to longitudinal axis of the annular distributor (14).

22. The device for thermally insulating a pipe (10) according to claim 11, **characterized by** comprising means for circulating in the annular distributor (14) a cooling fluid for cooling opposite facing surfaces of the delivering gap (24).

23. The device for delivering a pre-expanded foam according to claim 11, **characterized by** that the annular distributor (14) has a circular shape.

24. The device for delivering a pre-expanded foam according to claim 11, **characterized by** that the annular distributor (14) has an elliptical shape.
